# EUROPÄISCHE PATENTSCHRIFT

(11) **EP 0 568 820 B1**
(45) Veröffentlichungstag und Bekanntmachung des Hinweises auf die Patenterteilung: **11.01.1995**
(21) Anmeldenummer: 93105662.6
(22) Anmeldetag: 06.04.1993
(51) Int. Cl.: B60R 22/44

(54) **Gurtaufroller mit Zugentlastung für Sicherheitsgurt-Rückhaltesysteme in Fahrzeugen**
Tension relieved belt retractor for safety belt restraint systems in vehicles
Enrouleur de ceinture à réduction de tension pour systèmes de retenue à ceinture de sécurité pour véhicules

(30) Priorität: 15.04.1992 DE 9205266 U
(43) Veröffentlichungstag der Anmeldung: 10.11.1993
(73) Patentinhaber: TRW REPA GMBH, 73553 Alfdorf (DE)
(72) Erfinder: Mödinger, Thomas, W-7077 Alfdorf-Vordersteinenberg (DE); Schmid, Johannes, W-7070 Schwäbisch Gmünd-Hussenhofen (DE)
(74) Vertreter: Degwert, Hartmut, Dipl.-Phys.

(56) Entgegenhaltungen:
- DE-C- 3 838 175

## Beschreibung

Die Erfindung betrifft einen Gurtaufroller mit Zugentlastung für Sicherheitsgurt-Rückhaltesysteme in Fahrzeugen, mit einer zwischen einem gehäusefesten Teil und der das Gurtband aufnehmenden Gurtspule wirksamen Aufrollfeder, deren erstes Ende an dem gehäusefesten Teil angreift, mit einem in den Kraftfluß zwischen Aufrollfeder und Gurtspule eingefügten, drehbar gelagerten Klinkenrad, woran das zweite Ende der Aufrollfeder triebschlüssig angeschlossen ist, mit einer schwächer als die Aufrollfeder dimensionierten, spiralförmigen Hilfsfeder, die ihrerseits zwischen dem Klinkenrad und der Gurtspule wirksam ist, wobei das Klinkenrad mit einer Klinke zusammenwirkt, die in Abhängigkeit von einem Steuerkriterium die Drehbewegung des Klinkenrades sperrt oder freigibt.

Ein solcher Gurtaufroller ist aus der DE-PS 38 38 175 bekannt und dient zur Erhöhung des Tragekomforts des Gurtes. Bei gesperrtem Klinkenrad ist der durch den angelegten Gurt auf den Fahrzeuginsassen ausgeübte Druck gering, da er nur durch die schwächer als die Aufrollfeder dimensionierte Hilfsfeder bestimmt wird. Sobald diese sogenannte Komfortstellung durch Freigabe des Klinkenrades aufgehoben wird, zieht die stärkere Aufrollfeder die Windungen der Hilfsfeder in Anlage zueinander und wirkt allein auf die Gurtspule, um das Gurtband vollständig und zuverlässig aufzurollen.

Üblicherweise wird die Klinke durch einen aufwendigen Elektromagneten gesteuert, durch den das Gerät erheblich verteuert wird.

Der Erfindung liegt daher die Aufgabe zugrunde, die Einsteuerung der Klinke mechanisch zu bewerkstelligen mittels eines kostengünstig herstellbaren Mechanismus, der zuverlässig arbeitet und auch in vorhandene Aufrollerkonstruktionen leicht integriert werden kann.

Diese Aufgabe wird erfindungsgemäß dadurch gelöst, daß die Klinke durch einen schwenkbar gelagerten Steuerhebel in das Klinkenrad einsteuerbar ist, der reibschlüssig an ein getriebenes Zahnrad eines Untersetzungsgetriebes angekoppelt ist, welches die Drehbewegung der Gurtspule untersetzt. Dadurch ist nicht nur eine kostengünstige Konstruktion gegeben, sondern es wird auch ein einfaches Montieren der Baugruppen ermöglicht. Eine Einwirkung auf die Rückzugskraft für das Gurtband ist durch den reibschlüssig angekoppelten Steuerhebel fast nicht gegeben, da der durch den angekoppelten Steuerhebel hervorgerufene Reibungswiderstand sich aufgrund des Untersetzungsgetriebes nur minimal auswirkt. Weiterhin nimmt der erfindungsgemäße Gurtaufroller kaum zusätzlichen Platz ein, so daß der bisher zur Verfügung stehende Einbauraum für den erfindungsgemäßen Gurtaufroller ausreicht.

Gemäß einer vorteilhaften Ausführungsform ist an der Klinke ein Zahnsegment begrenzt drehbar gelagert, dessen Verzahnung bei eingesteuerter Klinke mit einem Steuerzahnrad kämmt, das drehfest mit dem getriebenen Zahnrad gekoppelt ist, und einen beiderseits der Mitte seines Kreisbogens ansteigenden Durchmesser aufweist. Durch Abwälzen des Zahnsegments an dem Steuerzahnrad wird eine Stellkraft auf die Klinke zu deren Ausrücken aus der Verzahnung des Klinkenrades übertragen. Durch das Ansteigen des Durchmessers wird also die Klinke zunehmend von dem Steuerzahnrad weggedrückt und somit auf einfache Weise aus dem Eingriff mit dem Klinkenrad ausgerückt. Das Ausrücken ist dabei sowohl in Gurtbandabzugsrichtung als auch in Gurtbandaufzugsrichtung durch das in beide Richtungen mit ansteigendem Durchmesser kämmende Zahnsegment gewährleistet. Über die Ausbildung des Zahnsegments, insbesondere durch die Zunahme des Durchmessers und durch die Ausbildung der ineinandergreifenden Zähne, ist der Komfortbereich, also der Bereich, in dem das Klinkenrad blockiert ist, im Verhältnis zur Gurtspulendrehung einfach einstellbar.

Damit das Zahnsegment immer mit seinem mittleren Zahnbereich beim Einsteuern in das Steuerrad eingreift, wird das Zahnsegment durch eine Feder in eine mittlere Ruhestellung vorgespannt.

Gemäß einer weiteren Ausführungsform ist mit dem Steuerzahnrad ein Schlepphebel reibschlüssig gekoppelt, der mit zwei voneinander beabstandeten Anschlägen an der Klinke angreift und eine erneute Einsteuerung der Klinke in das Klinkenrad nach weiterer Rückdrehung der Gurtspule verhindert sowie erst bei erneutem Gurtbandabzug eine Ausgangsstellung einnimmt, in welcher er die Einsteuerung der Klinke zuläßt. Insbesondere ist dabei ein mit der Klinke verbundener Nocken zwischen den Anschlägen angeordnet und zwischen den Anschlägen eine Steuerfläche vorgesehen, über die der Nocken mit der Klinke in die entsprechenden Stellungen geführt wird. Bei Drehung der Gurtspule in Gurtbandabzugsrichtung wird die Klinke, der Schlepphebel und der Steuerhebel in ihre Ausgangsstellung verschwenkt. Aus dieser Stellung kann die Klinke nun wieder nach erfolgtem Gurtbandabzug durch einen bestimmten anschließenden Gurtbandeinzug in das Klinkenrad eingesteuert werden.

Die Ein- und Ausschaltpositionen der Klinke werden dadurch gewährleistet, daß über eine Totpunktfeder die Klinke beim Einsteuern in ihre Eingriffsstellung rastet und durch die Totpunktfeder in dieser Eingriffsstellung stabilisiert wird.

Weitere Merkmale und Vorteile der Erfindung ergeben sich aus den Unteransprüchen sowie aus der folgenden Beschreibung und Zeichnung, auf die Bezug genommen wird. In der Zeichnung zeigen:
- Fig. 1: eine schematische Seitenansicht einer Ausführungsform des Gurtaufrollers gemäß der vorliegenden Erfindung;

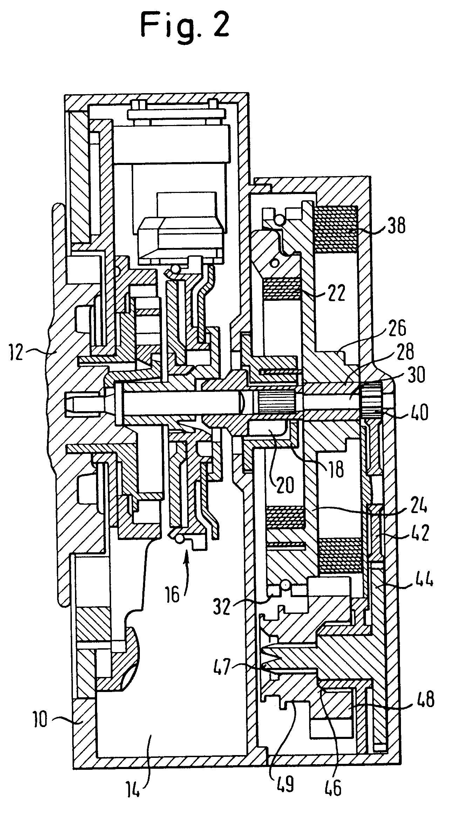

- Fig. 2: eine Schnittansicht dieses Gurtaufrollers entlang der Linie A-A von Fig. 1;
- Fig. 3: eine perspektivische Rückansicht des Untersetzungsgetriebes und des Steuermechanismus für die Klinke von Fig. 1; und
- Fig. 4: eine Rückansicht des Untersetzungsgetriebes und des Steuermechanismus für die Klinke von Fig. 1.

In einem Gehäuse 10 des Gurtaufrollers ist eine Gurtspule 12 drehbar gelagert. Die Gurtspule 12 ist über einen in einer Zwischenkammer 14 aufgenommenen Sperrmechanismus, der zum Verständnis der Erfindung nicht beiträgt und daher nicht beschrieben wird, drehfest mit einer Mitnehmerhülse 18 verbunden, die am Gehäuse 10 drehbar gelagert ist. Diese Mitnehmerhülse 18 ist formschlüssig mit einem drehfest an die Gurtspule 12 angeschlossenen Teil 20 gekoppelt. Am Außenumfang der Mitnehmerhülse 18 greift das innere Ende einer spiralförmigen Hilfsfeder 22 an, deren Windungen die Mitnehmerhülse 18 koaxial umgeben. Das äußere Ende dieser Hilfsfeder 22 ist an ein Klinkenrad 24 angeschlossen, das mittels einer Nabe 26 drehbar auf einem Gleitlager 28 einer auf der einen Seite mit der Gurtspule 12 verbundenen und auf der anderen Seite im Gehäuse 10 gelagerten Welle 30 angeordnet ist. Das Klinkenrad 24 weist an seinem Außenumfang gleichmäßig verteilte Klinkenzähne 32 auf. Diese Klinkenzähne 32 wirken mit einer am Gehäuse 10 um eine Achse 36 schwenkbar gelagerten Klinke 34 zusammen.

Am Außenumfang der Nabe 26 des Klinkenrades 24 greift das innere Ende einer spiralförmigen Aufrollfeder 38 an. Das äußere Ende dieser Aufrollfeder 38 ist an dem Gehäuse 10 festgelegt. Die Aufrollfeder 38 und die Hilfsfeder 22 sind somit über das Klinkenrad 24 funktionell in Reihe zwischen dem Gehäuse 10 und der Gurtspule 12 geschaltet, solange das Klinkenrad 24 frei drehbar ist. Die Aufrollfeder 38 ist aber erheblich stärker dimensioniert als die Hilfsfeder 22, so daß sie diese spannt, bis ihre Windungen eng aufeinander liegen. In diesem Zustand ist dann die unverminderte Kraft der Aufrollfeder 38 zwischen dem Gehäuse 10 und der Gurtspule 12 wirksam.

Für die Einsteuerung der Klinke 34 ist ein Untersetzungsgetriebe vorgesehen. Dieses Untersetzungsgetriebe besteht aus einem Ritzel 40, einem in das Ritzel 40 eingreifenden Zwischenzahnrad 42 und einem in das Zwischenzahnrad 42 eingreifenden Zahnrad 44. Das Ritzel 40 ist drehfest mit der Welle 30 verbunden und überträgt die Drehbewegung von der Welle 30 und somit von der Gurtspule 12 auf das Zahnrad 44 in einem Untersetzungsverhältnis von 5 : 1. Das Zwischenzahnrad 42 und das Zahnrad 44 sind dabei drehbar im Gehäuse 10 gelagert. Über einen ein Keilwellenprofil 46 aufweisenden axialen Vorsprung 47 des Zahnrads 44 ist dieses mit einem Steuerzahnrad 48 drehfest verbunden. Das Steuerzahnrad 48 weist einen Reibscheibenbereich 49 auf, an dem ein Steuerhebel 50 mittels einer Schenkelfeder 51 reibschlüssig anliegt und daran gekoppelt ist. Bei überschreiten des Reibwiderstandes ist der Steuerhebel 50 jedoch auf dem Vorsprung 47 des Zahnrads 44 drehbar. Der Steuerhebel 50 greift in eine Ausnehmung 52 der Klinke 34 ein.

An der Klinke 34 ist ein Zahnsegment 54 begrenzt drehbar gelagert. Die Verzahnung des Zahnsegments 54 kämmt bei eingesteuerter Klinke 34 mit dem Steuerzahnrad 48, das drehfest mit dem getriebenen Zahnrad 44 verbunden ist. Die Verzahnung weist des weiteren beiderseits der Mitte des Kreisbogens des Zahnsegments 54 einen ansteigenden Durchmesser auf, so daß durch Abwälzen des Zahnsegments 54 an dem Steuerzahnrad 48 eine Stellkraft auf die Klinke 34 zu deren Ausrücken aus der Verzahnung des Klinkenrads 24 übertragen wird. Das Zahnsegment 54 ist dabei um einen mit der Klinke 34 verbundenen Zapfen 56 verdrehbar. An der dem Zapfen 56 entfernt gelegenen Ende der Klinke 34 ist ein Stift 58 angeordnet. Der Stift 58 und das Zahnsegment 54 sind durch eine Feder 60 vorgespannt, die das Zahnsegment 54 in einer mittleren Ruhestellung hält. Dadurch wird gewährleistet, daß das Zahnsegment 54 immer mit seinem mittleren Verzahnungsbereich in das Steuerzahnrad 48 beim Einsteuern der Klinke 34 in das Klinkenrad 24 eingreift.

Mit dem Steuerzahnrad 48 ist weiterhin ein Schlepphebel 62 reibschlüssig gekoppelt. Die reibschlüssige Kopplung des Schlepphebels 62 als auch des Steuerhebels 50 wird jeweils mittels der anliegenden Schenkelfeder 51 gewährleistet. Der Schlepphebel 62 ist koaxial auf dem Steuerzahnrad 48 gelagert und weist an seinem freien Ende zwei voneinander beabstandet angeordnete Anschläge 64, 66 auf. Die beiden Anschläge 64 und 66 sind über eine Steuerfläche 68 miteinander verbunden. Der Zapfen 56, um den das Zahnsegment 54 drehbar ist, steht auf der anderen Seite der Klinke 34 nach außen hervor und dient als Steuernocken für die Steuerfläche 68. Durch die beiden Anschläge 64 und 66 wird eine erneute Einsteuerung der Klinke 34 in das Klinkenrad 24 nach weiterer Rückdrehung der Gurtspule 12 verhindert. Erst bei einem erneuten Gurtbandabzug nimmt die Klinke 34 eine Ausgangsstellung ein, in welcher der Schlepphebel 62 die Einsteuerung der Klinke 34 zuläßt.

An der Klinke 34 ist an dem dem Eingriffsbereich der Klinke 34 entfernt gelegenen Ende eine mit dem Gehäuse 10 verbundene Totpunktfeder 70 vorgesehen. Die Klinke 34 überwindet beim Einsteuervorgang die anliegende Federkraft der Totpunktfeder 70, rastet in ihre Eingriffstellung ein und wird in ihrer Eingriffsstellung stabilisiert.

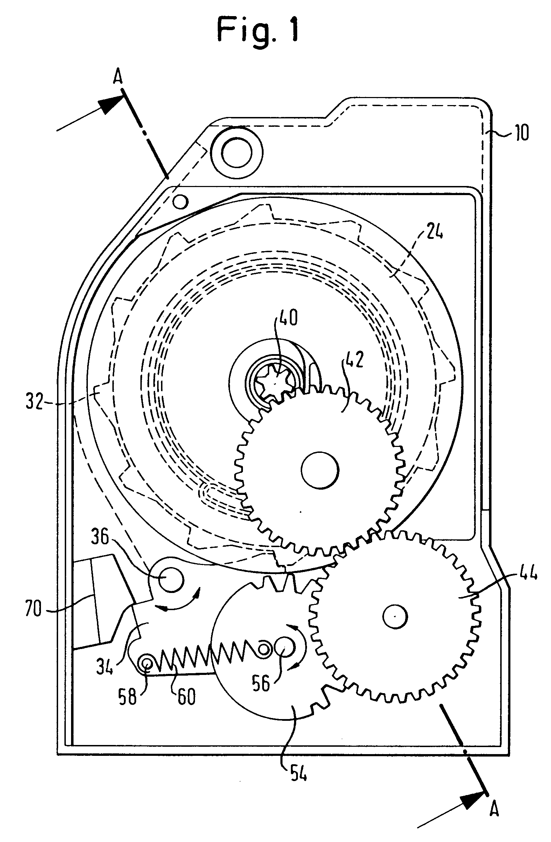

Beim Anlegen des Gurtbandes wird das Gurtband zunächst in Gurtbandabzugsrichtung sowie die Gurtspule 12 und das Ritzel 40 entgegen dem Uhrzeigersinn bewegt (Fig. 1). Das Zwischenzahnrad 42 überträgt die Bewegung des Ritzels 40 auf das Zahnrad 44 mit der Untersetzung von 5 : 1 entgegen dem Uhrzeigersinn. Die Zahnräder 42 und 44 werden von dem Gehäuse 10 axial gesichert. Durch die Drehbewegung des Zahnrads 44 und des reibschlüssig angeschlossenen Steuerhebels 50 entgegen dem Uhrzeigersinn wird die Klinke 34 in der Ausgangsstellung gehalten.

Nach dem Angurten ergibt sich eine gewisse kurze Bewegung des Gurtbandes in Gurtbandeinzugsrichtung und somit eine Drehung der Gurtspule 12, des Ritzels 40 und des Zahnrads 44 in bezug auf Fig.1 im Uhrzeigersinn. Diese kurze Gurtbandeinzugsbewegung bewirkt durch Mitnehmen des Steuerhebels 50 das Einsteuern der Klinke 34 in das Klinkenrad 24, so daß das Klinkenrad 24 blockiert ist. Da das Klinkenrad 24 über die eingesteuerte Klinke 34 nunmehr am Gehäuse 10 festgehalten wird, ist zwischen dem Gehäuse 10 und der Gurtspule 12 nur noch die Kraft der Hilfsfeder 22 wirksam, also eine gegenüber der Kraft der Aufrollfeder 38 erheblich verminderte Kraft, so daß die Spannung im Gurtband entsprechend vermindert wird. Ab diesem Moment ist der Komfortbereich über die spiralförmige Hilfsfeder 22 wirksam.

Gleichzeitig mit dem Einsteuern der Klinke 34 in das Klinkenrad 24 wird das auf der Klinke 34 drehbar gelagerte Zahnsegment 54 mit dem Steuerzahnrad 48 in Eingriff gebracht. Durch das Ansteigen des Durchmessers der Verzahnung des Zahnsegments 54 wird die Klinke 34 bei Drehung des Steuerzahnrads 48, also bei weiterem Gurtbandeinzug oder Gurtbandauszug zunehmend von dem Steuerzahnrad 48 weggedrückt und somit aus der Verzahnung mit dem Klinkenrad 24 ausgerückt. Das Ausrücken ist dabei sowohl bei einer Bewegung der Gurtspule 12 in Gurtbandabzugsrichtung als auch bei einer Bewegung der Gurtspule 12 in Gurtbandaufzugsrichtung gewährleistet. Über die Ausbildung des Zahnsegments 45, insbesondere durch die Zunahme des Durchmessers und der ineinandergreifenden Zähne ist der Komfortbereich, also der Bereich in dem das Klinkenrad 24 blockiert ist, im Verhältnis zur Bewegung der Gurtspule 12 einfach einstellbar. Die nötige Ausrückkraft kann nur durch Drehen des Zahnsegments 54 bis zu einem vorbestimmten Punkt erreicht werden.

Die Aufrollfeder 38 ist nach dem Ausrücken der Klinke 34 aus dem Klinkenrad 24 bestrebt, das Klinkenrad 24 in Drehung zu versetzen und dabei die Hilfsfeder 22 zu spannen, bis ihre Windungen eng aufeinanderliegen. Sobald dieser Zustand erreicht ist, wird zwischen Gurtspule 12 und Gehäuse wieder die unverminderte Kraft der Aufrollfeder 38 wirksam.

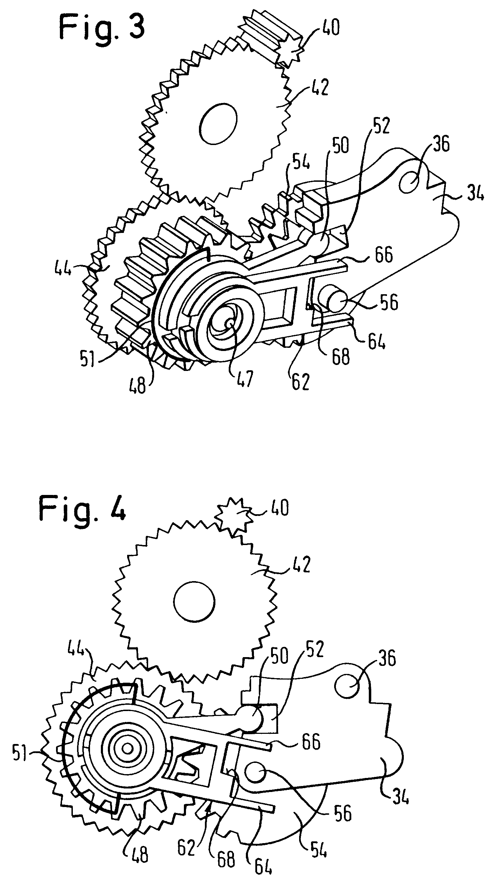

Der Schlepphebel 62 verhindert durch seine in Folge der Drehbewegung zwangsbedingte Stellung des Zapfens 56 am in bezug auf Fig.4 unteren Ende der Steuerfläche 68 ein weiteres Einsteuern der Klinke 34 in das Klinkenrad 24. Das Gurtband kann dadurch mit der Kraft der Aufrollfeder 38 in seine Ablegestellung aufgerollt werden. Der Schlepphebel 62 wird bei einem erneuten Auszug des Gurtbandes sofort in seine Ausgangsstellung verschwenkt, wobei der Zapfen 56 dann an dem in bezug auf Fig. 4 oberen Anschlag 66 des Schlepphebels 62 anliegt. Die Einsteuerung der Klinke 34 in das Klinkenrad 24 ist nunmehr in der beschriebenen Weise von neuem möglich.

## Patentansprüche

1. Gurtaufroller mit Zugentlastung für Sicherheitsgurt-Rückhaltesysteme in Fahrzeugen, mit einer zwischen einem gehäusefesten Teil (10) und der das Gurtband aufnehmenden Gurtspule (12) wirksamen Aufrollfeder (38), deren erstes Ende an dem gehäusefesten Teil (10) angreift, mit einem in den Kraftfluß zwischen Aufrollfeder (38) und Gurtspule (12) eingefügten, drehbar gelagerten Klinkenrad (24), woran das zweite Ende der Aufrollfeder (38) triebschlüssig angeschlossen ist, mit einer schwächer als die Aufrollfeder (38) dimensionierten, spiralförmigen Hilfsfeder (22), die ihrerseits zwischen dem Klinkenrad (24) und der Gurtspule (12) wirksam ist, und einer mit dem Klinkenrad (24) zusammenwirkenden Klinke (34), die in Abhängigkeit von einem Steuerkriterium die Drehbewegung des Klinkenrades (24) sperrt oder freigibt, dadurch gekennzeichnet, daß die Klinke (34) durch einen schwenkbar gelagerten Steuerhebel (50) in das Klinkenrad (24) einsteuerbar ist, der reibschlüssig an ein getriebenes Zahnrad (44) eines Untersetzungsgetriebes (40, 42, 44) angekoppelt ist, welches die Drehbewegung der Gurtspule (12) untersetzt.

2. Gurtaufroller nach Anspruch 1, dadurch gekennzeichnet, daß an der Klinke (34) ein Zahnsegment (54) begrenzt drehbar gelagert ist, dessen Verzahnung bei eingesteuerter Klinke (34) mit einem Steuerzahnrad (48) kämmt, das drehfest mit dem getriebenen Zahnrad (44) gekoppelt ist, und einen beiderseits der Mitte seines Kreisbogens ansteigenden Durchmesser aufweist, so daß durch Abwälzen des Zahnsegments (54) an dem Steuerzahnrad (48) eine Stellkraft auf die Klinke (34) zu deren Ausrücken aus der Verzahnung des Klinkenrades (24) übertragen wird.

3. Gurtaufroller nach Anspruch 2, dadurch gekennzeichnet, daß das Zahnsegment (54) durch eine Feder (60) in eine mittlere Ruhestellung vorgespannt wird.

4. Gurtaufroller nach Anspruch 2 oder 3, dadurch gekennzeichnet, daß mit dem Steuerzahnrad (48) ein Schlepphebel (62) reibschlüssig gekoppelt ist, der mit zwei voneinander beabstandeten Anschlägen (64, 66) an der Klinke (34) angreift und eine erneute Einsteuerung der Klinke (34) in das Klinkenrad (24) nach weiterer Rückdrehung der Gurtspule verhindert sowie erst bei erneutem Gurtbandabzug eine Ausgangsstellung einnimmt, in welcher er die Einsteuerung der Klinke (34) zuläßt.

5. Gurtaufroller nach Anspruch 4, dadurch gekennzeichnet, daß ein mit der Klinke (34) verbundener Nocken zwischen den Anschlägen (64, 66) angeordnet ist und zwischen den Anschlägen (64, 66) eine Steuerfläche (68) vorgesehen ist, über die der Nocken (56) mit der Klinke (34) in die entsprechenden Stellungen geführt wird.

6. Gurtaufroller nach einem der vorstehenden Ansprüche, dadurch gekennzeichnet, daß die Klinke (34) durch eine Totpunktfeder (70) in ihrer Eingriffsstellung stabilisiert ist.

## Claims

1. A belt retractor with tension ease-off means for a safety belt restraining system in vehicles comprising a retractor spring (38) drivingly arranged between a part (10) secured to a housing and the belt drum (12) taking up the belt webbing, a first end of the spring being in engagement with the part (10) secured to the housing, a rotatably mounted ratchet wheel (24) arranged in the flow of force between the belt retractor spring (38) and the belt drum (12), and with which the second end of the belt retractor spring (38) is drivingly connected, an auxiliary spiral spring (22) which is weaker than the belt retractor spring (38) and which for its part is drivingly arranged between the ratchet wheel (24) and the belt drum (12), the ratchet wheel (24) being in cooperation with a pawl (34), which in a manner dependent on a control criterion is adapted to prevent or enable rotation of the ratchet wheel (24), characterized in that the pawl (34) is adapted to be controlled by a pivotally mounted control lever (50) to come into engagement with the ratchet wheel (24), which drive lever is coupled frictionally with a driven gear wheel (44) of a step-down transmission (40, 42, 44) to step down the rotary movement of the belt drum (12).

2. The belt retractor as claimed in claim 1, characterized in that a toothed segment (54) is pivoted on the pawl (34) for limited angular movement, its teeth being in mesh, when the pawl (34) is engaged, with a controlling gear wheel (48) which is coupled with the driven gear wheel (44) for joint rotation, said segment having a diameter increasing to both sides of the center of its arc, so that on rolling of the toothed segment (54) on the control gear wheel (48) an actuating force is exerted on the pawl (34) for causing disengagement from the teeth of the ratchet wheel (24).

3. The belt retractor as claimed in claim 2 characterized in that the toothed segment (54) is urged by a spring (60) into a central neutral position.

4. The belt retractor as claimed in claim 2 or claim 3, characterized in that a drag lever (62) is frictionally connected with the control gear wheel (48) and is adapted to engage two spaced abutments (64, 66) on the pawl (34) and prevents a renewed engagement of the pawl (34) with the ratchet wheel (24) after further reverse rotation of the belt drum and only assumes a home position after renewed draw off of belt webbing, in which home position it permits engagement of the pawl (34).

5. The belt retractor of claim 4, characterized in that a cam follower connected with the pawl (34) is arranged between the abutments (64, 66) and a cam surface (68) is provided between the abutments (64, 66), the cam follower (56) being guided with the pawl (34) by said cam surface into the corresponding positions.

6. The belt retractor as claimed in any one of the preceding claims, characterized in that the pawl (34) is stabilized in its engagement position by a dead center spring (70).

## Revendications

1. Enrouleur de ceinture à réduction de tension pour des systèmes de retenue de ceinture de sécurité dans des véhicules automobiles, comprenant un ressort d'enroulement (38) gui agit entre une partie (10) solidaire du boîtier et la bobine de ceinture (12) recevant la sangle de ceinture et dont la première extrémité agit sur la partie (10) solidaire du boîtier, comprenant une roue à cliquet (24) qui est montée en rotation et est insérée dans le flux de forces entre le ressort d'enroulement (38) et la bobine de ceinture (12) et avec laquelle la seconde extrémité du ressort d'enroulement (38) crée une liaison d'entraînement, comprenant un ressort auxiliaire spiralé (22) qui est plus faible que le ressort d'enroulement (38) et qui, pour sa part, agit entre la roue à cliquet (24) et la bobine de ceinture (12), et un cliquet (34) qui coopère avec la roue à cliquet (24) et qui, en fonction d'un critère de commande, autorise ou interdit le mouvement de rotation de la roue à cliquet (24), caractérisé en ce que le cliquet (34) peut être engagé dans la roue à cliquet (24) par l'intermédiaire d'un levier de commande (50) qui est monté pivotant et qui est accouplé, en créant une liaison par friction, avec une roue dentée menée (44) d'un mécanisme de démultiplication (40, 42, 44) qui démultiplie le mouvement de rotation de la bobine de ceinture (12).

2. Enrouleur de ceinture selon la revendication 1, caractérisé en ce que, sur le cliquet (34), est monté, en rotation limitée, un segment denté (54) dont la denture s'engrène, lorsque le cliquet (34) est engagé, avec une roue dentée de commande (48) qui est solidarisée en rotation à la roue dentée menée (44) et qui présente un diamètre qui augmente de part et d'autre du centre de son arc de cercle, de sorte que, lorsque le segment denté (54) tourne sur la roue dentée de commande (48), une force de positionnement est transmise au cliquet (34) pour le faire sortir de la denture de la roue à cliquet (24).

3. Enrouleur de ceinture selon la revendication 2, caractérisé en ce que le segment denté (54) est précontraint par un ressort (60) dans une position intermédiaire de repos.

4. Enrouleur de ceinture selon la revendication 2 ou 3, caractérisé en ce qu'à la roue dentée de commande (48) est relié, en créant une liaison par friction, un levier d'entraînement (62) qui agit sur le cliquet (34) au moyen de deux butées (64, 66) distantes l'une de l'autre, qui empêche le cliquet (34) de se réengager dans la roue à cliquet (24) à l'issue d'une rotation de la bobine de ceinture vers l'arrière et qui n'adopte sa position initiale qu'après un nouveau déroulement de la sangle de ceinture, ledit levier d'entraînement (62) autorisant, dans cette position initiale, l'engagement du cliquet (34).

5. Enrouleur de ceinture selon la revendication 4, caractérisé en ce qu'une came reliée au cliquet (34) est disposée entre les butées (64, 66) et, entre les butées (64, 66), est prévue une surface de commande (68) par l'intermédiaire de laquelle la came (56) est amenée, avec le cliquet (34), dans les positions correspondantes.

6. Enrouleur de ceinture selon l'une des revendications précédentes, caractérisé en ce que le cliquet (34) est stabilisé dans sa position engrenée par un ressort de point mort (70).
